# EUROPEAN PATENT SPECIFICATION

(11) **EP 2 417 273 B1**
(45) Date of publication and mention of the grant of the patent: **13.02.2013**
(21) Application number: 10711948.9
(22) Date of filing: 07.04.2010
(51) Int. Cl.: C22B 7/00, B03C 1/22

(54) **METHOD AND APPARATUS FOR SEPARATING A NON-FEROUS METAL-COMPRISING FRACTION FROM FERROUS SCRAP**
VERFAHREN UND VORRICHTUNG ZUR TRENNUNG EINER NICHTEISENMETALLHALTIGEN FRAKTION VON EISENSCHROTT
PROCÉDÉ ET APPAREIL PERMETTANT LA SÉPARATION D'UNE FRACTION DE MÉTAL NON FERREUX A PARTIR DE FERRAILLE

(30) Priority: 08.04.2009 NL 2002730
(43) Date of publication of application: 15.02.2012
(73) Proprietor: Resteel B.V., 1171 PK Badhoevedorp (NL)
(72) Inventor: REM, Peter Carlo, 2288 AB Rijswijk (NL); BERKHOUT, Simon Peter Maria, 2636 BC Schipluiden (NL)
(74) Representative: Van Breda, Jacobus
(86) International application number: PCT/NL2010/050186
(87) International publication number: WO 2010/117273

(56) References cited:
- EP-A- 0 455 948
- WO-A-01/26793
- AU-B2- 726 763
- DE-B- 1 051 752
- DE-C- 729 487
- FR-A- 1 348 410
- JP-A- 4 320 790
- US-A- 1 522 343
- US-A- 2 056 426
- US-A- 2 291 042
- US-A- 2 690 263
- US-A- 3 057 477
- US-A- 6 138 833

## Description

The invention concerns both a method and an apparatus for separating a non-ferrous metal-comprising fraction from ferrous scrap, in particular from steel scrap that is produced from end of life consumer-products such as cars in car shredders, as well as electric and electronic appliances that are being recycled for their valuable materials. The non-ferrous metal fraction may for instance be a copper-comprising fraction, which usually originates from electrical coils or transformers. It may also concern other metals such as zinc, lead or cadmium. These metals are commonly used in batteries or other sources that unintentionally are mixed with the ferrous scrap.

It is known from EP-A-1 878 505 to apply a separating device embodied with a magnet in a drum that supports a conveyor belt, for separating liberated ferrous scrap from non-liberated ferrous scrap from a mixture of both the liberated and the non-liberated ferrous scrap that is transported with said conveyor belt. The term 'liberated ferrous scrap' refers to fragments which essentially do not contain materials other than iron or steel, whereas the term 'non-liberated ferrous scrap' refers to scrap fragments containing also other materials, in particular copper.

There is a continuous quest for liberated ferrous scrap i.e. iron or steel-scrap essentially free from foreign materials such as copper, zinc, lead, aluminium or cadmium for introducing such scrap into the steel manufacturing process. In order to qualify as steel-scrap of sufficient quality the average copper content of such liberated ferrous scrap must be less than 0.2 weight% and preferably even less than 0.1 weight%. Similar limits apply in connection with other non-ferrous metals.

US-A_6,138,833 relates to a system for employing a placer gold mining method. The system includes a transport pipe for a mixture of fluid and gold ore, having separator boxes connected to the transport pipe which are connected in series and spaced at a predetermined interval. The separator boxes each have a cross-sectional area that is greater than that of the transport pipe, and the flow rate may be reduced where the separator boxes are provided in proportion to the respective cross-sectional areas. As the flow rate decreases, the placer gold having the greatest specific gravity are first allowed to settle, and the remainder having the next greater specific gravity are then allowed to settle, and so on.

The invention is concerned with separating a non-ferrous metal-comprising fraction from unsorted ferrous scrap in order to improve the suitability of the remainder of the scrap to be applied as feed-stock for the steel manufacturing process.

In order to address this objective the method and the apparatus of the invention are characterized by one or more of the appended claims.

In a first aspect of the invention use is made of a conveyor belt for moving a mixture of the non-liberated and the liberated ferrous scrap through a separation zone at which the conveyor belt is supported by a rotatable drum, whereby in said drum a magnet is provided inducing a magnetic field in the entirety of said separation zone with magnetic field lines that emerge radially from the drum in a first part of the separation zone, and that return radially to the drum in a second part of the separation zone, wherein the first part and the second part of the separation zone are distinct from and adjacent to each other and together form the separation zone.

The inventors have found this measure to appear best suited to meet the objective already expressed in EP-A-1 878 505 to have the magnetic field lines extend as much as possible parallel to the conveyor belt surface, as seen in the conveying direction of said conveyor belt.

Practice has shown that with this apparatus for separating the non-liberated ferrous scrap from the liberated ferrous scrap, the latter ferrous scrap can be purified up to a level that 75 volume% or 60 weight% of the original input of ferrous scrap can be graded into the category liberated ferrous scrap which is immediately usable as input for the steelmaking process. The remainder of 25 volume% corresponding to 40 weight% of the original input of ferrous scrap then remains as non-liberated ferrous scrap that requires further processing for separation of the non-ferrous metal-comprising fraction thereof.

It is thus a further objective of the invention to further separate the non-ferrous metal-comprising fraction from ferrous scrap, in particular from the ferrous scrap that qualifies as the non-liberated ferrous scrap resulting from the separation in the just-mentioned apparatus. It is however expressly remarked that the following discussion concerning the separation of a non-ferrous metal-comprising fraction from ferrous scrap is also applicable to a stream of ferrous scrap, which in general may come available from any other source and not necessarily from the separation that has been established between non-liberated ferrous scrap and liberated ferrous scrap as mentioned above.

In accordance with a second aspect of the invention therefore a method for separating a non-ferrous metal-comprising fraction from ferrous scrap is proposed, wherein the ferrous scrap is moved by a conveyor that supports said ferrous scrap to a processing device for separating the non-ferrous metal-comprising fraction from the remainder of the ferrous scrap. Said processing device supplies a beam of water that leaves the processing device in a substantially horizontal flow, and in this method the ferrous scrap is released from the conveyor and moved from outside the waterbeam into said waterbeam so as to cause that the ferrous scrap is allowed to fall and move further, subject to the forces of gravity and the waterbeam.

Surprisingly it has been shown that with this method an effective separation of the non-ferrous metal-comprising fraction from ferrous scrap can be obtained, which the inventors believe is caused by the fact that the non-ferrous metal-comprising fraction concerns parts that are different in shape and form then the remainder of the ferrous scrap which is essentially free from those parts. An explanation for this may be that the ferrous scrap is modified by the shredding process causing that the copper-comprising fraction gets enriched with parts having relatively more spherical shapes. For batteries forming a major source of zinc, cadmium and lead it is held that these parts already have partly spherical or at least a non-flat shape of their own, which differentiates these parts from the essentially flat ferrous scrap that forms the said remainder.

The method of the invention as just recited can be suitably carried out in an apparatus for separating a non-ferrous metal-comprising fraction from ferrous scrap. This apparatus comprises a processing device and a conveyor for supporting and moving the ferrous scrap to said processing device for separating the non-ferrous metal-comprising fraction from the remainder of the ferrous scrap, and the processing device comprises a fluid-outlet for a waterbeam at which fluid-outlet the waterbeam leaves the said outlet in a substantially horizontal flow, and the conveyor is arranged to release during operation the ferrous scrap from the conveyor and move said ferrous scrap from outside the waterbeam into this waterbeam so as to allow that the ferrous scrap falls and moves further, subject to the forces of gravity and the waterbeam.

It is then particularly desirable that the fluid outlet for the waterbeam is arranged under the conveyor for the ferrous scrap, and proximal to an outlet of said conveyor where the ferrous scrap is released into the waterbeam. The spherical, non-flat and more heavy parts that are comprised in the ferrous scrap then fall through the waterbeam, whereas the remaining parts are carried with the waterbeam farther away from the fluid outlet for the waterbeam, thus effecting a separation between the non-ferrous metal-comprising fraction and the remainder fraction of the stream of ferrous scrap.

In order to make a clear distinction between the non-ferrous metal-comprising fraction and the remainder of the ferrous scrap it is then desirable that the apparatus comprises a first receiving area proximal to the processing device for receipt of the non-ferrous metal-comprising fraction, and at least one second receiving area distant from the processing device for receipt of the remainder of the ferrous scrap. When one applies more than one second receiving area it is possible to distinguish between several weight categories of the fragments of the remainder of the scrap.

It is established that for an effective operation of the apparatus in accordance with the method of the invention, the non-ferrous metal-comprising fraction preferably has more spherical or non-flat parts relative to the remainder of the ferrous scrap, and the said remainder of the ferrous scrap has relative to the non-ferrous metal-comprising fraction more non-spherical or flat parts.

As already mentioned the method and the apparatus of the invention can be applied to a stream of ferrous scrap irrespective of its origin. For the overall efficiency of the separation process it is however beneficial that the apparatus of the invention is placed behind a separating device for the separation of non-liberated ferrous scrap from liberated ferrous scrap as disclosed in EP-A-1 878 505, which document in its entirety is deemed inserted and incorporated herein.

The invention will hereinafter be further elucidated with reference to an exemplary embodiment and with reference to the attached schematic drawing.

In the drawing:
- Fig. 1 shows an apparatus for separating non-liberated ferrous scrap from liberated scrap in accordance with a first aspect of the invention, and
- Fig. 2 shows an apparatus for separating a non-ferrous metal-comprising fraction from ferrous scrap in accordance with a second aspect of the invention.

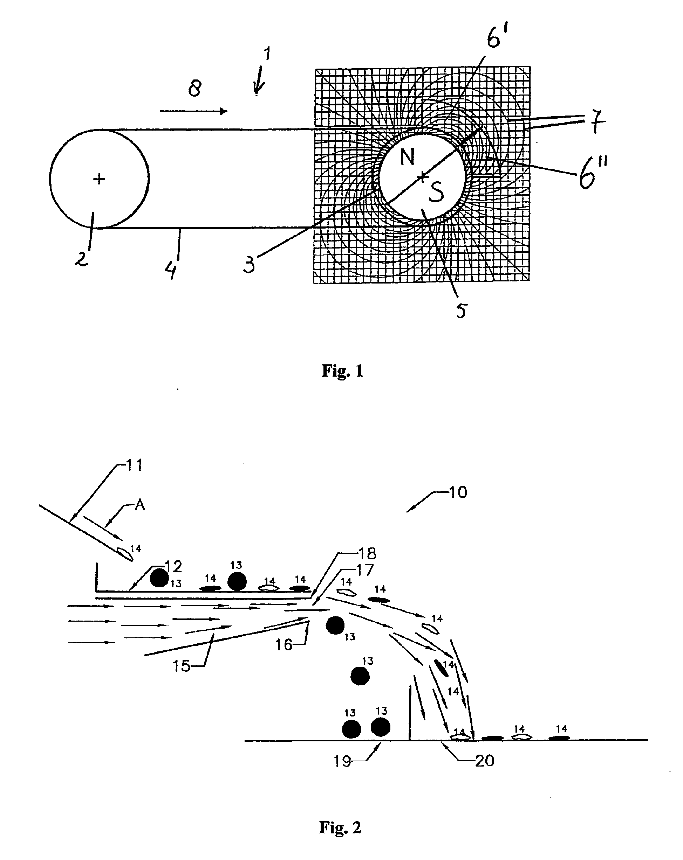

With reference to Fig. 1 an apparatus 1 is shown having a conveyor belt 4 for moving a mixture of non-liberated ferrous scrap and liberated ferrous scrap through a separation zone 6', 6" at which the conveyor belt 4 is supported by a rotatable drum 3. In said drum 3 a magnet 5 is provided that induces a magnetic field in the entirety of the separation zone 6', 6". The magnetic field lines 7 in said separation zone 6', 6" emerge radially from the drum 3 in a first part of 6' of the separation zone 6', 6" and return radially to the drum 3 in a second part 6" of the separation zone 6', 6", whereby the first part 6' and the second part 6" of the separation zone 6', 6" are distinct from each other and lie adjacent to each other and together form the complete separation zone 6', 6".

In accordance with a preferred embodiment of the invention the non-liberated ferrous scrap that is obtained by the operation of the apparatus 1 shown in Fig. 1 can be further upgraded and released from the non-ferrous metal-comprising fraction by the operation of the apparatus which is schematically shown in Fig. 2. It is however again expressly pointed out that the apparatus shown in Fig. 2 can also operate on feedstock originating from other sources than the apparatus shown in Fig. 1.

Fig. 2 schematically shows an apparatus 10 for separating a non-ferrous metal-comprising fraction 13 from ferrous scrap 13, 14 delivered to the apparatus 10 through a chute 11. The ferrous scrap 13, 14 enters the apparatus 10 through the chute 11 as symbolized with an arrow A and drops said scrap onto a conveyor 12.

The ferrous scrap 13, 14 that is moved by the conveyor 12 may have many different shapes and forms as symbolized with different scrap fragments 13 and 14. These scrap fragments 13, 14 are moved by the conveyor 12 to a processing device 15 for separating the non-ferrous metal-comprising fraction 13 from the remainder 14 of the ferrous scrap 13, 14. The non-ferrous metal-comprising fraction 13 has relative to the remainder 14 of the ferrous scrap more spherical and non-flat parts and the said remainder 14 of the ferrous scrap has relative to the non-ferrous metal-comprising fraction 13 more non-spherical or flat parts as symbolized by these fragments by the shapes shown in Fig. 2. The shape and form of the non-ferrous metal parts are partly due to the shredding process from which the stream of ferrous scrap originates, and which causes that particularly the copper-comprising fraction gets more spherical in shape. For metals such as zinc, lead and cadmium that originate from batteries, the shape is already non-flat to a degree that effective separation from the remainder of the ferrous scrap is possible.

The processing device 15 comprises a fluid outlet 16 for a waterbeam 17 and, as Fig. 2 shows, the waterbeam 17 flows during operation out of the processing device 15 essentially horizontally, and below and proximal to an outlet 18 of the conveyor 12 for the ferrous scrap 13, 14. As Fig. 2 illustrates, the conveyor 12 is arranged to release the ferrous scrap 13, 14 into the waterbeam 17 so as to allow that the ferrous scrap 13, 14 falls and moves further subject to the forces of gravity and the waterbeam. Due to the combined operation of the said forces exerted on the fragments 13, 14 of the ferrous scrap, a separation between the non-ferrous metal-comprising fraction 13 and the remainder 14 of the ferrous scrap is realized.

In order to secure the separation of the non-ferrous metal-comprising fraction 13 and the remainder 14 of the ferrous scrap, the apparatus 10 comprises a first receiving area 19 that is proximal to the processing device 15 for receipt therein of the non-ferrous metal-comprising fraction 13, and at least one second receiving area 20 distant from the processing device 15 and intended for receipt of the remainder 14 of the ferrous scrap.

For a proper operation of the apparatus 10 of the invention it has been established that the waterbeam 17 may be an approximately five centimetre thick waterbeam having a flowspeed in the horizontal direction of approximately 1 m/s. It has been found that as compared to the prior art the apparatus 10 shown in Fig. 2 saves labour in an amount of two men that normally have to sort out by hand a stream of 20-25 ton per hour of ferrous scrap. Apart from the savings in labour the resulting quality of the separation allows that of the ferrous scrap from which the non-ferrous metal-comprising fraction 13 is removed, the remaining fraction 14 accounts for approximately 70% of the weight originally provided at the infeed section of the apparatus 10.

## Claims

1. Method for separating a non-ferrous metal-comprising fraction (13) from ferrous scrap (13, 14), wherein the ferrous scrap (13, 14) is supported by a conveyor (12) that moves said ferrous scrap (13, 14) to a processing device (15) for separating the non-ferrous metal-comprising fraction (13) from the remainder (14) of the ferrous scrap, **characterized in that** the processing device (15) supplies a beam of water (17) leaving the processing device (15) in a substantially horizontal flow below and proximal to an outlet (18) of the conveyor (12) for the ferrous scrap (13, 14), and that the ferrous scrap is released from the conveyor (12) and moved from outside the waterbeam (17) into said waterbeam (17) so as to cause that the ferrous scrap (13, 14) is allowed to fall and move further, subject to the forces of gravity and the waterbeam (17), and the remaining parts are carried with the waterbeam (17) farther away from a fluid outlet (16) for the waterbeam (17), thus effecting a separation between the non-ferrous metal-comprising fraction (13) and the remainder fraction of the stream of ferrous scrap (13, 14).

2. Method according to claim 1, **characterized in that** the non-ferrous metal-comprising fraction (13) has relative to the remainder (14) of the ferrous scrap more spherical and non-flat parts (13), and the said remainder (14) of the ferrous scrap has relative to the non-ferrous metal-comprising fraction (13) more non-spherical or flat parts (14).

3. Method according to any one of claims 1-2, **characterized in that** the non-ferrous metal-comprising fraction (13) is received in a first receiving area (19) proximal to the processing device (15), and the remainder (14) of the ferrous scrap is received in one of a series of second receiving area's (20) distant from the processing device (15).

4. Apparatus for separating a non-ferrous metal-comprising fraction (13) from ferrous scrap (13, 14) comprising a processing device (15) and a conveyor (12) for supporting and moving the ferrous scrap (13, 14) to said processing device (15) for separating the non-ferrous metal-comprising fraction (13) from the remainder (14) of the ferrous scrap (13, 14), **characterized in that** the processing device (15) comprises a fluid-outlet (16) for a waterbeam (17), which fluid outlet (16) for the waterbeam (17) is arranged under the conveyor (12) for the ferrous scrap (13, 14) and proximal to an outlet (18) of said conveyor where the ferrous scrap (13, 14) is released into the waterbeam (17), which fluid-outlet (16) is arranged to have the waterbeam (17) leave the said outlet (16) in a substantially horizontal flow, and that the conveyor (12) is arranged to release during operation the ferrous scrap (13, 14) from the conveyor (12) and move said ferrous scrap (13, 14) from outside the waterbeam into said waterbeam (17) so as to allow the ferrous scrap to fall and move further, subject to the forces of gravity and the waterbeam (17), whereas the remaining parts are carried with the waterbeam (17) farther away from the fluid outlet (16) for the waterbeam (17), thus effecting a separation between the non-ferrous metal-comprising fraction (13) and the remainder fraction of the stream of ferrous scrap (13,14).

5. Apparatus according to claim 4, **characterized in that** it comprises a first receiving area (19) proximal to the processing device (15) for receipt of the non-ferrous metal-comprising fraction (13) and at least one second receiving area (20) distant from the processing device (15) for receipt of the remainder (14) of the ferrous scrap.

## Patentansprüche

1. Verfahren zur Trennung einer nichteisenmetallhaltigen Fraktion (13) von Eisenschrott (13, 14), wobei der Eisenschrott (13, 14) mittels eines Förderers (12) zugeführt wird, der den fraglichen Eisenschrott (13, 14) einer Prozesseinheit (15) zur Trennung der nichteisenmetallhaltigen Fraktion (13) vom Rest (14) des Eisenschrottes (13, 14) zuführt, **dadurch gekennzeichnet, dass** die Prozesseinheit (15) einen Wasserstrom (17) abgibt, welcher die Prozesseinheit (15) in einem überwiegend horizontalen Fluss unterhalb und nächstliegend zu einem Auslass (18) des Förderers (12) für den Eisenschrott (13, 14) verlässt, und dass der Eisenschrott (13, 14) vom Förderer (12) gelöst und von außenseitig des Wasserstrahls (17) ins Innere des Wasserstrahls (17) befördert wird, so dass dem Eisenschrott (13, 14) erlaubt wird zu fallen und weiterbewegt zu werden, und zwar hervorgerufen durch die Gravitationskraft und den Wasserstrahl (17), wobei die restlichen Teile mit dem Wasserstrahl (17) weiter entfernt von einem Flüssigkeitsauslass (16) des Wasserstrahls (17) befördert werden, so dass eine Trennung zwischen der nichteisenmetallhaltigen Fraktion (13) und der restlichen Fraktion des Stromes an Eisenschrott (13, 14) erfolgt.

2. Verfahren nach Anspruch 1, **dadurch gekennzeichnet, dass** die nichteisenmetallhaltige Fraktion (13) im Vergleich zum Rest (14) des eisenhaltigen Schrotts (13, 14) mehr sphärische und nicht ebene Teile (13) aufweist, und dass der Rest (14) des eisenhaltigen Schrotts (13, 14) im Vergleich zu der nichteisenmetallhaltigen Fraktion (13) mehr nicht sphärische oder flache Teile (14) aufweist.

3. Verfahren nach einem der Ansprüche 1 bis 2, **dadurch gekennzeichnet, dass** die nichteisenmetallhaltige Fraktion (13) in einem ersten Aufnahmebereich (19) benachbart zur Prozesseinheit (15) aufgenommen wird und der Rest (14) des Eisenschrotts (13, 14) in einer Reihe von zweiten Aufnahmebereichen (20) aufgenommen wird, die von der Prozesseinheit (15) beabstandet sind.

4. Vorrichtung zur Trennung einer nichteisenmetallhaltigen Fraktion (13) von Eisenschrott (13, 14), enthaltend eine Prozesseinheit (15) und einen Förderer (12) zur Zufuhr und zum Transport des Eisenschrotts (13, 14) zu der besagten Prozesseinheit (15), um die nichteisenmetallhaltige Fraktion (13) von dem Rest (14) des Eisenschrotts (13, 14) zu trennen, **dadurch gekennzeichnet, dass** die Prozesseinheit (15) einen Flüssigkeitsauslass (16) für einen Wasserstrahl (17) aufweist, wobei der Flüssigkeitsauslass (16) für den Wasserstrahl (17) unterhalb des Förderers (12) für den Eisenschrott (13,14) und nächstliegend zu einem Auslass (18) des besagten Förderers (12) angeordnet ist, wo der Eisenschrott (13, 14) in den Wasserstrahl (17) abgegeben wird, wobei der Flüssigkeitsauslass (16) so eingerichtet ist, dass der Wasserstrahl (17) den besagten Auslass (16) in einem überwiegend horizontalen Fluss verlässt, und dass der Förderer (12) so ausgebildet ist, dass während seines Betriebs der Eisenschrott (13, 14) vom Förderer (12) abgelöst wird und der besagte Eisenschrott (13, 14) von einer Außenseite des Wasserstrahls (17) in den Wasserstrahl (17) wandert, um dem Eisenschrott (13, 14) ein Fallen und ein Weiterbewegen zu ermöglichen, und zwar hervorgerufen durch die Gravitationskraft und den Wasserstrahl (17), wobei die restlichen Teile mit dem Wasserstrahl (17) von dem Flüssigkeitsauslass (16) des Wasserstrahls (17) weiter entfernt befördert werden, so dass eine Trennung zwischen der nichteisenmetallhaltigen Fraktion (13) und der restlichen Fraktion (14) des Stromes an Eisenschrott (13, 14) erfolgt.

5. Vorrichtung nach Anspruch 4, **dadurch gekennzeichnet, dass** sie einen ersten Aufnahmebereich (19) benachbart zur Prozesseinheit (15) zur Aufnahme der nichteisenmetallhaltigen Fraktion (13) und wenigstens einen zweiten Aufnahmebereich (20) entfernt von der Prozesseinheit (15) zur Aufnahme des Rests (14) des Eisenschrotts (13, 14) aufweist.

## Revendications

1. Méthode pour séparer une fraction de métal non ferreux (13) de ferraille (13, 14) dans laquelle la ferraille (13,14) est portée par un convoyeur (12) qui déplace ladite ferraille (13, 14) vers un dispositif de traitement (15) pour séparer la fraction de métal non ferreux (13) du restant (14) de la ferraille, **caractérisée en ce que** le dispositif de traitement (15) fournit un jet d'eau (17) quittant le dispositif de traitement (15) selon un écoulement essentiellement horizontal au-dessous et à proximité d'une sortie (18) du convoyeur (12) pour la ferraille (13, 14) et que la ferraille est libérée du convoyeur (12) et déplacée de l'extérieur du jet d'eau (17) dans ledit jet d'eau (17) de manière que la ferraille (13, 14) puisse tomber et se déplacer plus avant, sous l'effet des forces de gravité et du jet d'eau (17), tandis que les parties restantes sont transportées avec le jet d'eau (17) plus loin qu'une sortie de fluide (16) du jet d'eau (17), réalisant ainsi une séparation entre la fraction de métal non ferreux (13) et la fraction restante du flux de ferraille (13, 14).

2. Méthode selon la revendication 1, **caractérisée en ce que** la fraction de métal non ferreux (13) a par rapport au reste (14) de la ferraille des parties plus sphériques et non plates (13) et ledit reste (14) de la ferraille a par rapport à la fraction de métal non ferreux (13) davantage de parties non sphériques ou plates (14).

3. Méthode selon l'une des revendications 1-2, **caractérisée en ce que** la fraction de métal non ferreux (13) est reçue dans une première zone de réception (19) à proximité du dispositif de traitement (15) et le reste (14) de la ferraille est reçu dans une série de secondes zones de réception (20) distantes du dispositif de traitement (15).

4. Appareil pour séparer une fraction non ferreuse (13) de la ferraille (13, 14) comprenant un appareil de traitement (15) et un convoyeur (12) pour supporter et déplacer ia ferraille (13, 14) vers ledit dispositif de traitement (15) pour séparer la fraction de métal non ferreux (13) du reste (14) de la ferraille (13, 14), **caractérisé en ce que** le dispositif de traitement (15) comprend une sortie de fluide (16) pour un jet d'eau (17), laquelle sortie de fluide (16) pour le jet d'eau (17) est disposée sous le convoyeur (12) de ferraille (13, 14) et à proximité d'une sortie (18) dudit convoyeur où la ferraille (13, 14) est libérée dans le jet d'eau (17), laquelle sortie de fluide (16) est disposée pour que le jet d'eau (17) quitte ladite sortie (16) selon un écoulement essentiellement horizontal, et **en ce que** le convoyeur (12) et disposé pour libérer pendant le fonctionnement la ferraille (13, 14) du convoyeur (12) et déplacer ladite ferraille (13, 14) de l'extérieur du jet d'eau dans ledit jet d'eau (17) de façon à permettre à la ferraille de tomber et d'avancer plus loin, sous l'effet des forces de la gravité et du jet d'eau (17), alors que les parties restantes sont transportées avec le jet d'eau (17) plus loin de la sortie de fluide (16) du jet d'eau (17), réalisant ainsi une séparation entre la fraction de métal non ferreux (13) et la fraction restante du flux de ferraille (13, 14).

5. Appareil selon la revendication 4, **caractérisé en ce qu'**il comprend une première zone de réception (19) à proximité du dispositif de traitement (15) pour la réception de la fraction de métal non ferreux (13) et au moins une seconde zone de réception (20) distante du dispositif de traitement (15) pour la réception du reste (14) de la ferraille.
